# EUROPEAN PATENT SPECIFICATION

(11) **EP 4 459 322 B1**
(45) Date of publication and mention of the grant of the patent: **09.09.2026**
(21) Application number: 22915571.8
(22) Date of filing: 17.11.2022
(51) Int. Cl.: G01S 7/41, G01S 13/00, G01S 13/34, G01S 13/46, G01S 7/40

(54) **ESTIMATING DEVICE, ESTIMATING METHOD, AND PROGRAM**
SCHÄTZVORRICHTUNG, SCHÄTZVERFAHREN UND PROGRAMM
DISPOSITIF D'ESTIMATION, PROCÉDÉ D'ESTIMATION, ET PROGRAMME

(30) Priority: 27.12.2021 JP 2021212607
(43) Date of publication of application: 06.11.2024
(73) Proprietor: Panasonic Intellectual Property Management Co., Ltd., Kadoma-shi, Osaka 571-0057 (JP)
(72) Inventor: IIZUKA, Shoichi, Kadoma-shi, Osaka 571-0057 (JP); NAKAYAMA, Takeshi, Kadoma-shi, Osaka 571-0057 (JP); HONMA, Naoki, Morioka, Iwate 020-8550 (JP); TANAKA, Ryousuke, Morioka, Iwate 020-8550 (JP); ITO, Tomonori, Morioka, Iwate 020-8550 (JP); SHIRAKI, Nobuyuki, Morioka, Iwate 020-8550 (JP)
(74) Representative: Novagraaf International SA
(86) International application number: PCT/JP2022/042775
(87) International publication number: WO 2023/127340

(56) References cited:
- JP-A- 2018 084 432
- JP-A- 2018 084 432
- JP-A- 2020 109 391
- US-A1- 2020 011 967
- US-A1- 2020 209 379
- JUNJI ASADA ET AL: "Moving target detection with MUSIC for the bistatic radar using digital broadcasting signals", IEEE 20TH INTERNATIONAL SYMPOSIUM ON PERSONAL, INDOOR AND MOBILE RADIO COMMUNICATIONS (PIMRC 2009), IEEE, PISCATAWAY, NJ, USA, 13 September 2009 (2009-09-13), pages 1928 - 1932, XP031659608, ISBN: 978-1-4244-5122-7
- ASADA, JUNJI; SASASE, IWAO: "Moving Target Detection with MUSIC for the Bistatic Radar Using Digital Terrestrial Broadcasting Signals", IEICE TRANSACTIONS B, vol. J93-B, no. 8, 1 August 2010 (2010-08-01), pages 1061 - 1074, XP009547445, ISSN: 1344-4697

## Description

### [Technical Field]

The present disclosure relates to an estimating device, an estimating method, and so on, for estimating the distance or position of a living body by using radio signals.

### [Background Art]

A method that uses radio signals is being considered as a method for knowing the position of a person (see for example, Patent Literature (PTL) 1 to 4). PTL 1, 2, and 3 disclose techniques of estimating the position and state of a person that is a detection target by analyzing a component including a Doppler shift using difference calculation. PTL 4 and 5 disclose Doppler sensors that use orthogonal frequency division multiplexing (OFDM) signals. US2020/011967A1 describes an estimating device and an estimating method for estimating a direction or a position of a moving body by using radio signals.

### [Citation List]

### [Patent Literature]

[PTL 1] Japanese Unexamined Patent Application Publication No. 2015-117972
[PTL 2] Japanese Unexamined Patent Application Publication No. 2017-129558
[PTL 3] Japanese Unexamined Patent Application Publication No. 2018-008021
[PTL 4] Japanese Unexamined Patent Application Publication No. 2012-088279
[PTL 5] Japanese Unexamined Patent Application Publication No. 2012-137340

### [Non Patent Literature]

[NPL 1] H. Yamada, M. Ohmiya, Y. Ogawa and K. Itoh, "Superresolution techniques for time-domain measurements with a network analyzer," in IEEE Transactions on Antennas and Propagation, vol. 39, no. 2, pp. 177-183, Feb. 1991

### [Summary of Invention]

### [Technical Problem]

With the conventional methods, it is difficult to more accurately estimate the distance from the estimating device to a living body, the direction toward the living body, and so on.

The present disclosure is conceived in view of the above-described circumstances, and has as an object to provide an estimating device, and so on, capable of more accurately estimating the distance from the estimating device to a living body, and so on.

### [Solution to Problem]

In order to achieve the aforementioned object, an estimating device according to claim 1 is provided.

Furthermore, an estimating method according to claim 7 is provided.

It should be noted that these general and specific aspects may be implemented using a system, an integrated circuit, a computer program, or a computer-readable recording medium such as a CD-ROM, or any combination of an apparatus, a system, a method, an integrated circuit, a computer program, or a recording medium.

### [Advantageous Effects of Invention]

According to the present disclosure, it is possible to more accurately estimate the distance from the estimating device to a living body, and so on.

### [Brief Description of Drawings]

[FIG. 1]

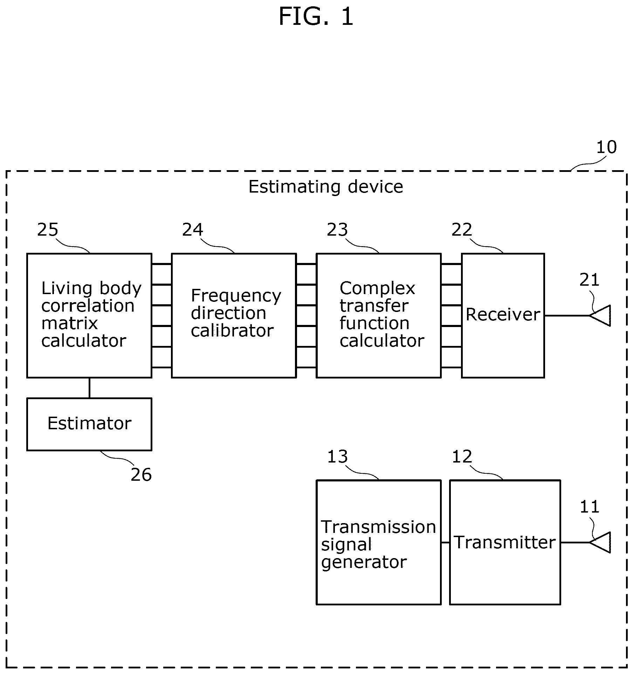

   FIG. 1 is a block diagram illustrating an example of a configuration of an estimating device according to Embodiment 1.
[FIG. 2]

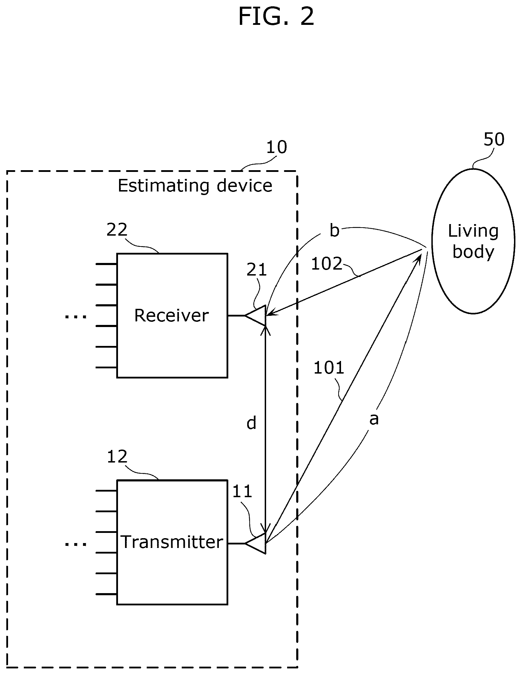

   FIG. 2 is a diagram illustrating an example of a detection target of the estimating device illustrated in FIG. 1.
[FIG. 3]

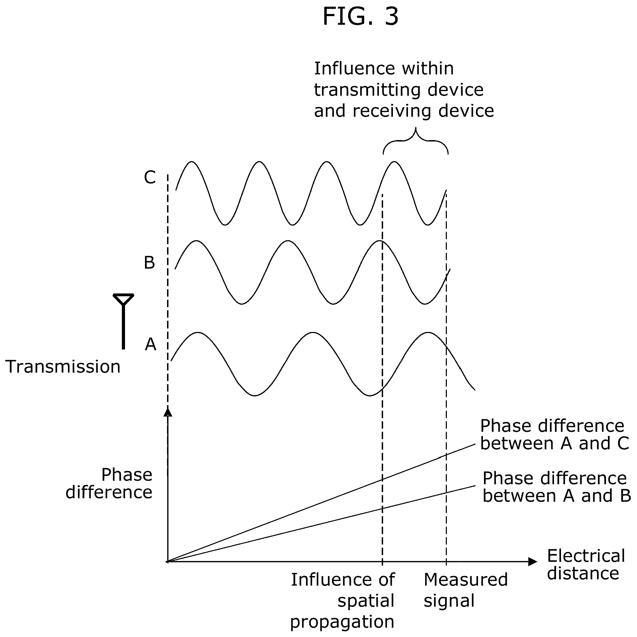

   FIG. 3 is a schematic diagram illustrating that the phase of a reception signal changes due to frequency and distance.
[FIG. 4]

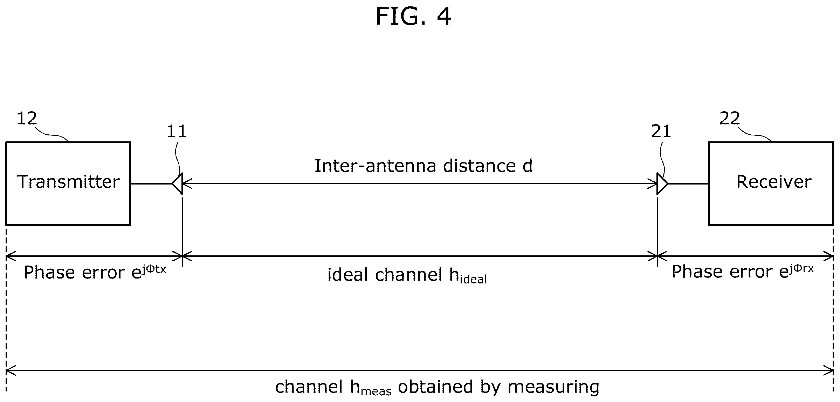

   FIG. 4 is a schematic diagram illustrating the relationship between a phase error and a channel according to Embodiment 1.
[FIG. 5]

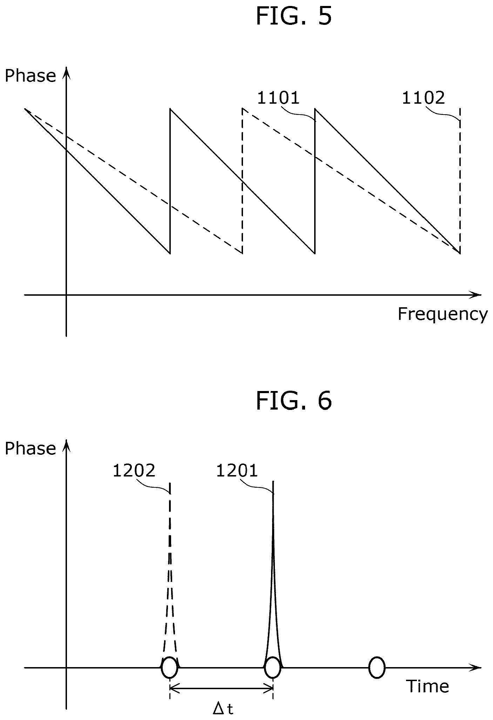

   FIG. 5 is a schematic diagram illustrating the relationship between frequency and phase difference slope.
[FIG. 6]
   FIG. 6 is a schematic diagram illustrating phases of a time domain living body component transfer function matrix according to Embodiment 1.
[FIG. 7]

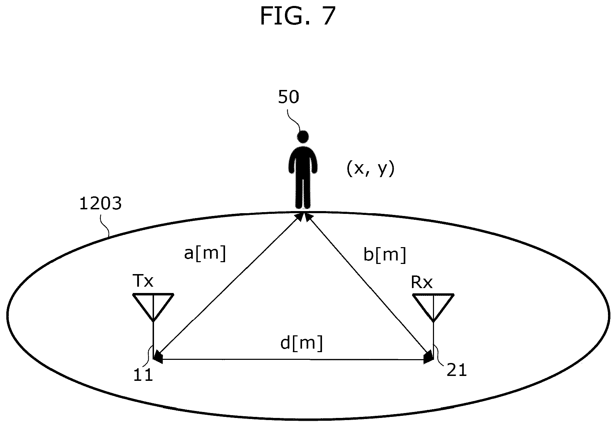

   FIG. 7 is a schematic diagram illustrating the position of a living body which is limited by the relationship between the living body, a transmission antenna element, and a reception antenna element, and by a third distance.
[FIG. 8]

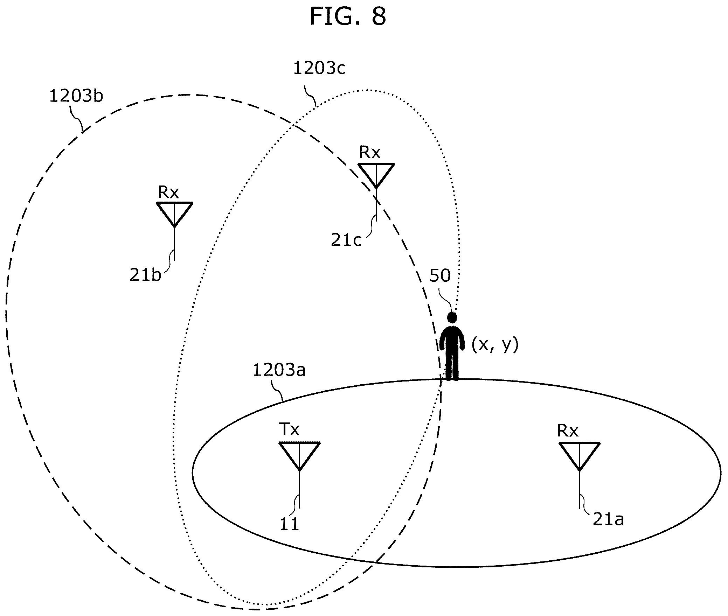

   FIG. 8 is a schematic diagram illustrating the estimation of the position of a living body by using a plurality of reception antenna elements.
[FIG. 9]

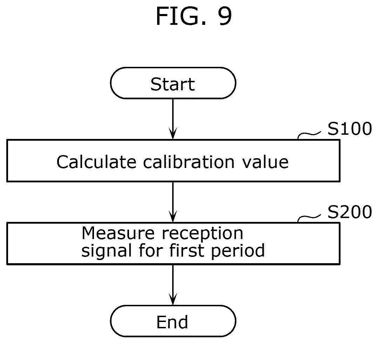

   FIG. 9 is a flowchart illustrating the estimation process by the estimating device according to Embodiment 1.
[FIG. 10]

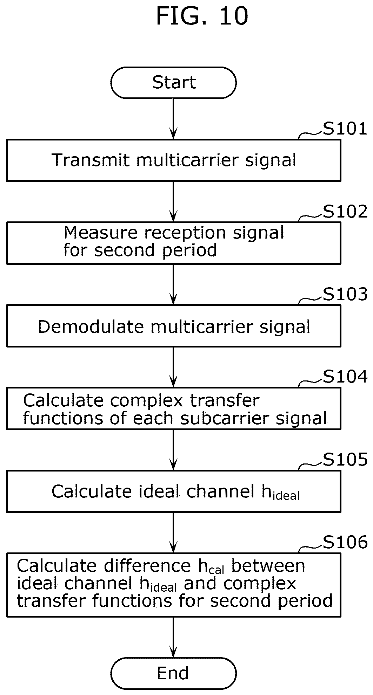

   FIG. 10 is a flowchart illustrating a calibration value calculation process according to Embodiment 1.
[FIG. 11]

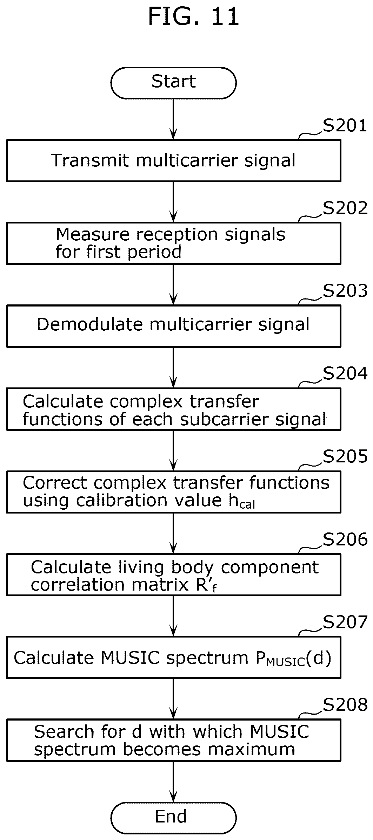

   FIG. 11 is a flowchart illustrating a ranging process according to Embodiment 1.
[FIG. 12]

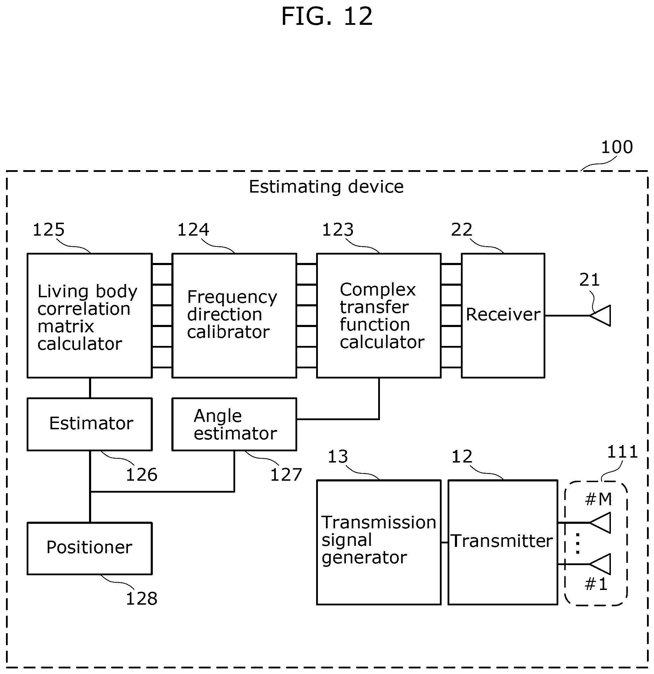

   FIG. 12 is a block diagram illustrating an example of a configuration of an estimating device according to Embodiment 2.
[FIG. 13]

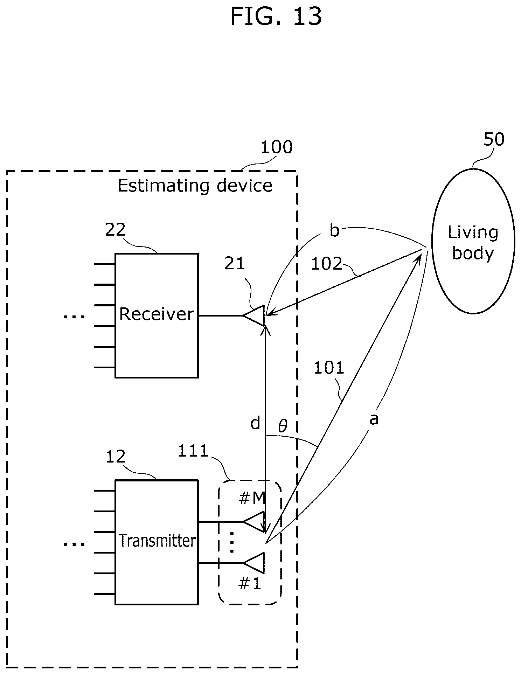

   FIG. 13 is a diagram illustrating an example of a detection target of the estimating device illustrated in FIG. 12.
[FIG. 14]

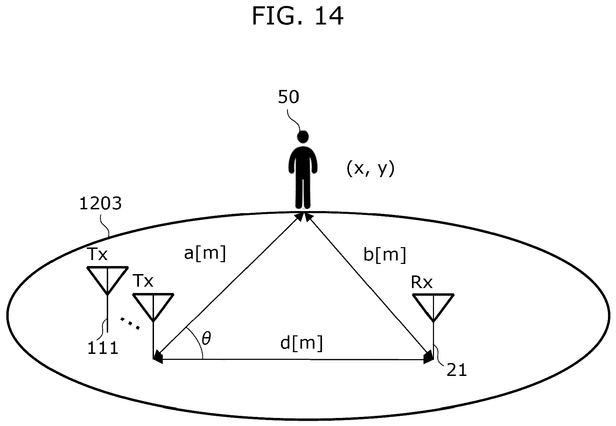

   FIG. 14 is a diagram illustrating an example of a positional relationship of a detection target of the estimating device illustrated in FIG. 12.
[FIG. 15]

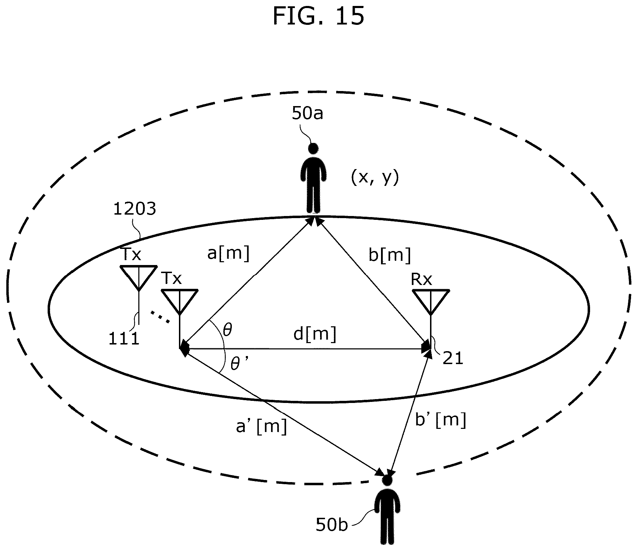

   FIG. 15 is a diagram illustrating an example of positional relationships of detection targets of the estimating device illustrated in FIG. 12, when a plurality of living bodies are present.
[FIG. 16]

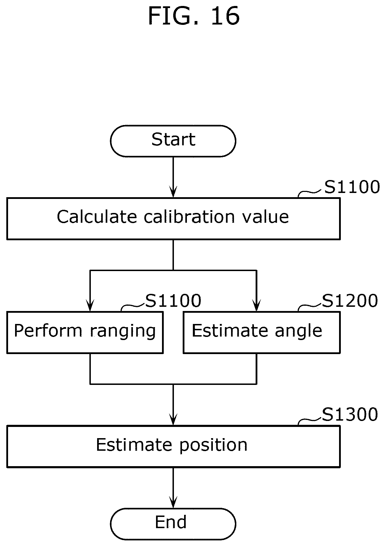

   FIG. 16 is a flowchart illustrating the estimation process by the estimating device according to Embodiment 2.

### [Description of Embodiments]

### (Underlying Knowledge Forming Basis of the Present Disclosure)

A method that uses radio signals is being considered as a method for knowing the position of a person.

For example, PTL 1 and 2 disclose transmitting a radio signal over a predetermined area, receiving, using an antenna, the radio signal reflected by a detection target, and estimating a complex transfer function between transmission and reception antennas. A complex transfer function is a function of a complex number representing a relationship between input and output, and, here, represents propagation characteristics between transmission and reception antennas. The number of elements of the complex transfer function is equivalent to the product of the number of transmission antennas and the number of reception antennas. In addition, PTL 3 discloses estimating the posture of a living body by using a radar cross-section (RCS) calculated from received power, with the same configuration as in PTL 2. RCS is an index indicating the area of an object that reflected a transmission wave, and the RCS of a living body changes in various ways according to the posture.

PTL 1 discloses that it is possible to know the position or state of a person that is a detection target by analyzing a component including a Doppler shift, using Fourier transform. More specifically, the temporal change of an element of a complex transfer function is recorded, and the temporal waveform thereof is Fourier-transformed. Through biological activity such as respiration or heartbeat, a living body such as a person exerts a small Doppler effect on the reflected wave. Therefore, a component including a Doppler shift includes the influence of the person. On the other hand, a component that does not include a Doppler shift is a component that is not influenced by the person, that is, a component corresponding to a reflected wave from a fixed object or a direct wave between transmission and reception antennas. Specifically, it is possible to know the position or state of a person that is a detection target, by using a component included in a predetermined frequency range in a Flourier-transformed waveform.

PTL 2 discloses a method of recording a temporal change in an element of a complex transfer function, and extracting a component including a small Doppler shift including the influence of a living body by analyzing difference information of the temporal change. Specifically, it is possible to know the position or state of a person that is a detection target by using the difference information.

In contrast, PTL 3 discloses an OFDM Doppler radar that transmits a pulse using an OFDM signal, and detects a Doppler shift caused by a traveling body that is a target. Furthermore, PTL 4 discloses, with regard to an OFDM Doppler radar, a high-speed processing method that does not require Fourier transform.

Furthermore, conventionally, techniques for improving the accuracy of estimation of complex transfer functions between transmission and reception antennas, by transmitting an OFDM signal are known. PTL 5 discloses that received noise components can be reduced by averaging complex transfer functions on a subcarrier basis.

However, in the methods in PTL 1, 2, and 3, non-modulated waves are transmitted, and thus it is difficult to make use of commercially available devices, and dedicated hardware is required. Specifically, it is not possible to use communication devices that are currently widely used, and thus a user needs to additionally provide dedicated hardware aside from an existing communication device.

Furthermore, in order to obtain sufficient accuracy with the methods in PTL 4 and 5, it is necessary to make pulses steep, which requires a wide frequency band. As such, the cost of hardware is more expensive compared to communication devices for public use.

In the technique in NPL 1, by transmitting and receiving signals having a plurality of frequencies using a measuring device such as a network analyzer, it is possible to estimate the time of flight (ToF) and distance, which can be computed from the ToF, between a transmission antenna and a reception antenna. As in a ranging sensor that uses a frequency modulated continuous wave (FMCW) radar, this makes use of the property in which, when two signals having different frequencies are transmitted at the same phase, the phase received by the reception antenna changes depending on the frequency difference between signals and the propagation distance between the antennas. The technique in NPL 1 improves resolution by performing ToF estimation using the multiple signal classification (MUSIC) method. However, it is necessary for the transmission side and reception side to either operate with the same reference frequency or be synchronized with high accuracy, and thus the technique cannot be used in household appliances such as a wireless LAN. Furthermore, only the distance between antennas can be estimated, and, for example, the distance to a living body that is not equipped with a special device cannot be estimated.

In view of the above, the inventors arrived at inventing, with high accuracy and low cost by using an existing transmission device, an estimating device, etc., capable of more accurately estimating the distance from the estimating device to a living body, and so on, using a multicarrier radio signal represented by an OFDM signal.

Specifically, an estimating device according to a first aspect of the present disclosure is an estimating device that estimates a distance to a living body and includes: a transmission signal generator that generates a multicarrier signal obtained by modulating a plurality of subcarrier signals; a transmission antenna including M transmission antenna elements, where M is a natural number greater than or equal to 1; a transmitter that causes the transmission antenna to transmit the multicarrier signal, by processing and outputting the multicarrier signal to the transmission antenna; a reception antenna including N reception antenna elements, where N is a natural number greater than or equal to 1; a receiver that measures, for a first period equivalent to a cycle derived from an activity of the living body, a plurality of reception signals which are received by each of the N reception antenna elements and include a reflected signal which is the multicarrier signal transmitted from each of the M transmission antenna elements that has been reflected or dispersed by the living body; a complex transfer function calculator that calculates a plurality of complex transfer functions for each of a plurality of subcarriers to which the plurality of subcarrier signals correspond, using the plurality of reception signals measured by the receiver in the first period, the plurality of complex transfer functions indicating a propagation characteristic between a transmission antenna element and a reception antenna element in each of M × N combinations which are combinations of each of the M transmission antenna elements and each of the N reception antenna elements; a living body correlation matrix calculator that calculates, for each of the plurality of subcarriers, a living body correlation matrix having M rows × N columns by (i) recording sequentially in time series, which is an order in which the plurality of reception signals are measured, the plurality of complex transfer functions calculated by the complex transfer function calculator and (ii) extracting components relating to the living body from the plurality of complex transfer functions recorded sequentially in time series, the (i) recording and the (ii) extracting being performed for each of the plurality of subcarriers and each of the M × N combinations; and an estimator that calculates, using the living body correlation matrix calculated for each of the plurality of subcarriers, a spectrum based on a multiple signal classification (MUSIC) method, and estimates, as a third distance, a distance for which the spectrum becomes a maximum value, wherein the third distance is a sum of a first distance between the transmission antenna and the living body and a second distance between the reception antenna and the living body.

With this configuration, a living body radar that measures distance to a living body can be realized by repurposing an existing communication device by using a multicarrier signal such as an OFDM signal as a transmission signal. For example, receiving devices of multicarrier signals such as OFDM signals are already widely used as mobile phones, television broadcast receiving devices, wireless LAN devices, and so on, and thus a living body radar that measures the distance to a living body can be realized at a lower cost than when non-modulated signals are used.

An estimating device according to a second aspect of the present disclosure is the estimating device according to the first aspect, further including: a calibrator that calculates a correction value for correcting a phase error in a subcarrier direction based on (i) ideal complex transfer functions between the M transmission antenna elements and the N reception antenna elements obtainable based on an inter-antenna distance between the M transmission antenna elements and the N reception antenna elements and (ii) a reference complex transfer function matrix including M × N complex transfer functions measured in a second period, and corrects the plurality of complex transfer functions for the first period.

For this reason, error due to the influence of phase characteristics of circuits and antennas inside the transmitter and receiver can be removed, and thus the distance from the estimating device to the living body can be more accurately estimated.

An estimating device according to a third aspect of the present disclosure is the estimating device according to the first aspect or the second aspect, wherein at least one of M or N is greater than or equal to 2, and the estimating device further includes: an angle estimator that calculates, using the plurality of complex transfer functions calculated by the complex transfer function calculator, a first angle that is an angle defined by two or more antenna elements among the M transmission antenna elements and the N reception antenna elements; and a positioner that calculates the first distance from the first angle and the third distance, and calculates a position of the living body.

For this reason, the position of the living body relative to the estimating device can be more accurately estimated.

An estimating device according to a fourth aspect of the present disclosure is the estimating device according to the first aspect or the second aspect, wherein at least one of M or N is greater than or equal to 3, and the estimator calculates, for each of the M × N combinations, an ellipse in which positions of the transmission element and the reception antenna element included in the combination are foci and a length of a major axis is the third distance, and estimates a position of the living body based on, among intersections of the M × N ellipses obtained by calculation, M × N intersections that are closest to each other.

For this reason, the position of the living body relative to the estimating device can be more accurately estimated.

An estimating device according to a fifth aspect of the present disclosure is the estimating device according to any one of the first to fourth aspects, wherein the living body correlation matrix calculator calculates the living body correlation matrix by performing inverse Fourier transform in a subcarrier direction on the plurality of complex transfer functions.

Using the MUSIC method enables ranging with fine distance resolution.

An estimating method according to a sixth aspect of the present disclosure is an estimating method performed by an estimating device including a transmission antenna including M transmission antenna elements, where M is a natural number greater than or equal to 1, and a reception antenna including N reception antenna elements, where N is a natural number greater than or equal to 1. The estimating method includes: generating a multicarrier signal obtained by modulating a plurality of subcarrier signals; causing the transmission antenna to transmit the multicarrier signal, by processing and outputting the multicarrier signal to the transmission antenna; measuring, for a first period equivalent to a cycle derived from an activity of a living body, a plurality of reception signals which are received by each of the N reception antenna elements and include a reflected signal which is the multicarrier signal transmitted from each of the M transmission antenna elements that has been reflected or dispersed by the living body; calculating a plurality of complex transfer functions for each of a plurality of subcarriers to which the plurality of subcarrier signals correspond, using the plurality of reception signals measured in the first period, the plurality of complex transfer functions indicating a propagation characteristic between a transmission antenna element and a reception antenna element in each of M × N combinations which are combinations of each of the M transmission antenna elements and each of the N reception antenna elements; calculating, for each of the plurality of subcarriers, a living body correlation matrix having M rows × N columns by (i) recording sequentially in time series, which is an order in which the plurality of reception signals are measured, the plurality of complex transfer functions calculated and (ii) extracting components relating to the living body from the plurality of complex transfer functions recorded sequentially in time series, the (i) recording and the (ii) extracting being performed for each of the plurality of subcarriers and each of the M × N combinations; and calculating, using the living body correlation matrix calculated for each of the plurality of subcarriers, a spectrum based on a multiple signal classification (MUSIC) method, and estimating, as a third distance, a distance for which the spectrum becomes a maximum value, wherein the third distance is a sum of a first distance between the transmission antenna and the living body and a second distance between the reception antenna and the living body.

With this configuration, a living body radar that measures distance to a living body can be realized by repurposing an existing communication device by using a multicarrier signal such as an OFDM signal as a transmission signal. For example, receiving devices of multicarrier signals such as OFDM signals are already widely used as mobile phones, television broadcast receiving devices, wireless LAN devices, and so on, and thus a living body radar that measures the distance to a living body can be realized at a lower cost than when non-modulated signals are used.

A program according to a seventh aspect of the present disclosure is a program for causing a computer that constitutes the estimating device to execute the estimating method according to the sixth aspect.

It should be noted that these generic and specific aspects may be implemented using a system, an integrated circuit, a computer program, or a computer-readable recording medium such as a CD-ROM, or any combination of an apparatus, a system, a method, an integrated circuit, a computer program, or a recording medium.

Hereinafter, exemplary embodiments of the present disclosure will be described in detail with reference to the Drawings.

### [Embodiment 1]

Hereinafter, a method with which the distance to a living body that is a detection target is estimated by estimating device 10 according to Embodiment 1 will be described with reference to the drawings.

### [Configuration of estimating device 10]

FIG. 1 is a block diagram illustrating an example of a configuration of estimating device 10 according to Embodiment 1. FIG. 2 is a diagram illustrating an example of a detection target of estimating device 10 illustrated in FIG. 1.

Estimating device 10 illustrated in FIG. 1 includes transmission antenna 11, transmitter 12, transmission signal generator 13, reception antenna 21, receiver 22, complex transfer function calculator 23, calibrator 24, living body correlation matrix calculator 25, and estimator 26. Estimating device 10 estimates the distance from estimating device 10 to living body 50, with estimating device 10 as a directional or positional reference.

### [Transmission antenna 11]

Transmission antenna 11 includes M transmission antenna elements. Here, M is a natural number greater than or equal to 1. In the present embodiment, transmission antenna 11 includes one transmission antenna element. As described above, the transmission antenna element transmits a multicarrier signal (transmission wave) generated by transmitter 12 to be described later.

### [Transmission signal generator 13]

Transmission signal generator 13 generates a multicarrier signal obtained by modulating a plurality of subcarrier signals. Specifically, transmission signal generator 13 generates a plurality of subcarrier signals corresponding to a plurality of subcarriers having mutually different frequency bands, and generates a multicarrier signal by multiplexing the generated plurality of subcarriers. In the present embodiment, transmission signal generator 13 is exemplified as generating, as a multicarrier signal, an OFDM signal which has a high frequency band utilization efficiency and consists of S subcarriers. However, aside from generating an OFDM signal in which respective subcarriers are orthogonal, other multicarrier signals such as a simple frequency division multiplexing (FDM) signal may be generated as long as it is a multicarrier signal obtainable by multicarrier modulation.

Furthermore, the signal generated by transmission signal generator 13 may be a signal that is shared with a signal used for communication.

### [Transmitter 12]

Transmitter 12 adds appropriate processing to the signal generated by transmission signal generator 13, to generate a transmission wave. The processing carried out here includes, for example, up-conversion in which the signal is converted from the intermediate frequency (IF) frequency band to the radio frequency (RF) frequency band, amplification in which the signal is amplified to the appropriate transmission level, etc. Then, as illustrated in FIG. 2, transmitter 12 outputs the processed multicarrier signal to transmission antenna 11 to thereby cause transmission antenna 11 to transmit the multicarrier signal. With this, the multicarrier signal is transmitted from the single transmission antenna element included in transmission antenna 11.

### [Reception antenna 21]

Reception antenna 21 includes N reception antenna elements. Here, N is a natural number greater than or equal to 1. In the present embodiment, reception antenna 21 includes one reception antenna element. Then, for example, as illustrated in FIG. 2, the one reception antenna element receives a signal that was transmitted by the single transmission antenna element and reflected by living body 50 (i.e., a reception signal).

### [Receiver 22]

Receiver 22 measures, for a first period equivalent to a cycle derived from an activity of living body 50, the reception signal that is received by the single reception antenna element and includes a reflected signal which is the multicarrier signal transmitted by the single transmission antenna element that has been reflected or dispersed by living body 50. A cycle derived from the activity of the living body is a living body-derived cycle (living body fluctuation cycle) which is a time period greater than or equal to a half-cycle of any of the cycles of respiration, heartbeat, and body motion of living body 50.

Receiver 22 converts the high-frequency signal received by the single reception antenna element into a low-frequency signal on which signal processing can be performed. Then, receiver 22 demodulates the one OFDM signal into S subcarrier signals. Each of the S subcarrier signals is represented by an IQ symbol. Receiver 22 outputs, to complex transfer function calculator 23, the S × M sets (S sets in the present embodiment) of subcarrier signals obtained by converting the high-frequency signal received by the N (one in the present embodiment) reception antenna elements, for at least the first period. It should be noted that, receiver 22 may continue to measure the reception signal already received by reception antenna 21, and continuously or periodically transmit the S subcarrier signals (IQ symbols) to complex transfer function calculator 23.

### [Complex transfer function calculator 23]

Complex transfer function calculator 23, using the reception signals measured in the first period by receiver 22, calculates, for each of the subcarriers to which the subcarrier signals correspond, a plurality of complex transfer functions indicating propagation characteristics between a transmission antenna element and a reception antenna element in each of M × N combinations (one combination in the present embodiment) which are the combinations of each of the M (one in the present embodiment) transmission antenna elements and each of the N (one in the present embodiment) reception antenna elements. It should be noted that the M × N combinations are all the obtainable one-to-one combinations between the M transmission antenna elements and the N reception antenna elements.

In the present embodiment, complex transfer function calculator 23 calculates, using the S × M sets (S sets in the present embodiment) of subcarrier signals transmitted from receiver 22, complex transfer functions indicating the propagation characteristics between each of the transmission antenna elements and each of the reception antenna elements, for each of the S subcarrier signals. It should be noted that the calculated complex transfer function matrix also includes reflected waves that did not arrive via living body 50, such as direct waves and reflected waves derived from a fixed object.

The method of calculating complex transfer functions from one subcarrier signal includes, for example, a method of dividing a reception IQ symbol using a known signal such as a pilot signal or a guard interval signal. In the present embodiment, in order to focus on the phase difference between the S subcarrier signals, subcarrier signal S0, which serves as a reference, is used to divide the other subcarrier signals.

Complex transfer function calculator 23 calculates the complex transfer functions for each of the S subcarrier signals, and outputs the obtained S complex transfer function matrices to calibrator 24.

It should be noted that complex transfer function calculator 23 may constantly calculate the complex transfer function matrix, either continuously or on a regular basis, using each of the subcarrier signals outputted by receiver 22. By adopting this configuration, when estimating device 10 shares the hardware of a communication device, the complex transfer function matrix that is normally calculated for use in processing by the communication device can also be used by estimating device 10.

### [Calibrator 24]

Calibrator 24 obtains the calculated complex transfer function matrix h, and performs calibration for phase error in the frequency direction. Phase errors that require calibration will be described with reference to FIG. 3. FIG. 3 is a schematic diagram illustrating that the phase of a reception signal changes according to frequency and distance.

When signals of different frequencies propagate through a space and are received, the amount of phase rotation by a transmission signal with respect to the reception signal is different depending on the frequency and the distance between the transmission antenna and the reception antenna (hereafter referred to as inter-antenna distance). For this reason, the inter-antenna distance can be calculated by transmitting and receiving signals having a plurality of already-known frequencies, measuring phase differences, and performing back calculation. However, the phase difference that is actually measured includes, not only the influence of spatial propagation between the transmission antenna and the reception antenna, but also error due to the influence of phase characteristics of internal circuits and antennas of the transmitter and receiver. For this reason, in order to correctly measure the inter-antenna distance, it is necessary to remove the phase error from the measured signal.

FIG. 4 is a diagram illustrating the correspondence between the previously described phase error and a channel (complex transfer function).

The phase error can be calculated by calculating the difference between channel hₘₑₐₛ indicated by a matrix obtained by measurement and an ideal channel h_{ideal} of the space indicated by a matrix that can be calculated from the inter-antenna distance. This is not limited to estimating the inter-antenna distance but also applies to the case of estimating the distance to living body 50.

Hereinafter, the specific operation of calibration 24 will be described. Here, a phase error in the frequency direction refers to, among differences with respect to the phase of subcarrier signal S0 used as a reference calculated by complex transfer function calculator 23, a phase difference not resulting from spatial propagation between the antennas. Specifically, the phase error includes the influence of the frequency characteristics of transmission antenna 11 and reception antenna 21, the electrical length of the internal circuitry of transmitter 12, the electrical length of the internal circuitry of receiver 22, and so on. The phase error includes phase difference e^{jΦtx} caused by transmission antenna 11 and transmitter 12 and phase error e^{jΦrx} caused by reception antenna 21 and receiver 22.

Calibrator 24 performs calibration of a complex transfer function matrix, based on a frequency direction calibration value calculated using a predetermined method. First, calibrator 24 calculates h_{ideal}, which is the ideal channel between antenna elements, based on pre-inputted inter-antenna distance d between a transmission antenna element and a reception antenna element. Inter-antenna distance d is, for example, a value obtained by a user actually measuring the distance between the transmission antenna element and the reception antenna element. Here, h_{ideal} is a vector represented by the complex number, and h_{ideal} has S elements which is the subcarrier number. The i-th element is calculated as follows.
[Math. 1] ${h}_{ideal \left(i\right)} = exp \left(-{jk}_{i}d\right)$ Here, kᵢ is the wavenumber of the i-th subcarrier. In this manner, h_{ideal} is an ideal complex transfer function between the transmission antenna element and the reception transmission element obtainable based on the inter-antenna distance between the transmission antenna element and the reception transmission element.

Next, calibrator 24 obtains, from complex transfer function calculator 23, a reference complex transfer function matrix that includes M × N complex transfer functions measured in a second period, and serves as a reference. It should be noted that measurement of the reference complex transfer function matrix is preferably performed in a person-free state in which there is little influence from a living body, but may include the influence of a living body. An initial complex transfer function matrix obtained from complex transfer function calculator 23 may be used for the reference complex transfer function matrix. It should be noted that, when measurement is performed in a state that is not person-free or when the direct wave component is not sufficiently big, Fourier transform may be performed on the reference complex transfer function matrix for the measurement time (slow time), and the result obtained by extracting only a component that does not temporally fluctuate may be used for the reference complex transfer function matrix. Furthermore, calibrator 24 may calculate a new reference complex transfer function matrix based on data of a timing at which fluctuation obtained by simultaneously calculating the temporal fluctuations of absolute values of complex transfer functions is small, and update the reference complex transfer function matrix with the new reference complex transfer function matrix calculated. In the present embodiment, since there is one each of the transmission antenna element and the reception antenna element, the reference complex transfer function matrix is the vector hₘₑₐₛ having an element number of S.

Next, calibrator 24 calculates the correction value for correcting the phase errors in the subcarrier direction, based on the ideal channel h_{ideal} and the reference complex transfer function (channel hₘₑₐₛ). Specifically, calibrator 24 calculates the difference between h_{ideal}, which is the ideal channel obtained by calculation, and the measured channel hₘₑₐₛ, and sets the difference as the correction value (calibration value) h_{cal}. Specifically, h_{cal} is calculated through the following calculation.
[Math. 2] ${h}_{cal} = {h}_{ideal} ∅ {h}_{meas}$ Here, Ø represents Hadamard division which is per vector element division.

Since calibration value h_{cal} is the same as long as the reference complex transfer function matrix does not change, it is desirable to store the value in a memory, or the like, and use the stored value as calibration value h_{cal} from the next time onward.

Lastly, calibrator 24 calibrates (corrects) complex transfer function matrix h according to the following equation, based on calibration value h_{cal}.
[Math 3] $h ′ = ∠ {h}_{cal} ∘ h$ Here, *∠**h**_{cal}* represents the phase angle of ***h***_{c a l}. Furthermore, ∘ represents the Hadamard product which is the per element product.

Calibrator 24 outputs the calibrated complex transfer function matrix h' obtained in the above-described manner to living body correlation matrix calculator 25 located downstream.

It should be noted that, in the present embodiment, although a method of calculating the calibration value from the measurement result of complex transfer function is described, since the calibration value does not change over time, a value measured at the factory, or the like, using a measuring device such as a network analyzer, or the like, may be used for the calibration value.

### [Living body correlation matrix calculator 25]

Living body correlation matrix calculator 25 records sequentially in time series, which is the order in which the plurality of reception signals are measured, the plurality of calibrated complex transfer function matrices calculated by calibrator 24, for each of the subcarriers and each of the M × N combinations. Then, living body correlation matrix calculator 25 extracts, for each of the subcarriers and each of the M × N combinations, components of the living body from the calibrated complex transfer function matrices h' recorded in time series and measured for the first time period, to thereby calculate, for each of the subcarriers, a living body component transfer function matrix expressed by a M × N-dimension matrix.

Here, the living body component transfer function matrix is the extracted reflected wave or dispersed wave (living body component) included in the reception signal that passed via living body 50. The methods of calculating the living body component from the complex transfer functions recorded in time-series include the method using Fourier transform disclosed in PTL 1 and the method using difference information disclosed in PTL 2.

For example, with the method that uses Fourier transform, by performing Fourier transform on complex transfer function matrices h' for the measurement time (slow time) and extracting only specific frequency components, living body component transfer function matrix h'_{fft} can be calculated for each of frequency components included in the frequencies, for example, 0.1 Hz to 3 Hz, which can include the influence of activities of the living body.

Here, the relationship between frequency (column direction of the matrix) and phase of living body component transfer function matrix h'_{fft} is illustrated in FIG. 5. Solid line 1101 represents the fluctuation of the phase of each component of the living body component transfer function matrix according to the subcarrier frequency when living body 50 is present at a certain position. The phase here is the difference from the phase in the frequency of subcarrier S0 serving as a reference during complex transfer function calculation. Since the length of the path of the radio wave reflected by living body 50 becomes shorter when living body 50 approaches the transmission antenna or reception antenna from the aforementioned position, the slope on the graph becomes gentle and becomes like broken line 1102. In principle, time of flight (ToF) or the distance to the living body can be estimated from this graph slope. Specifically, when time domain living body component transfer function matrix h'_{ifft} is calculated by further performing inverse Fourier transform in the subcarrier direction on living body component transfer function matrix h'_{fft}, the time from when a signal including a living body component is transmitted from the transmitter to when the signal is received by the receiver is obtained.

FIG. 6 illustrates the relationship between the time (column direction of the matrix) and the phase of time domain living body component transfer function matrix h'_{ifft}. The phase changes of solid line 1101 and broken line 1102 in FIG. 5 appear as the peaks shown by solid line 1201 and broken line 1202, respectively. However, temporal resolution Δt of time that is calculated here is expressed by
[Math 4] $Δt = \frac{1}{B} \left[s\right]$ using bandwidth B of the subcarrier. For example, when the bandwidth is 20 MHz, the temporal resolution is equivalent to 0.5 µs or approximately 15 m when converted to distance resolution, which does not stand up to practical use.

In view of this, in the present embodiment, resolution is improved by using the multiple signal classification (MUSIC) method. In order to use the MUSIC method, living body correlation matrix calculator 25 calculates correlation matrix R'_{f} of living body component transfer function matrix h'_{fft} according to the following equation.
[Math 5] $R {′}_{f} = E \left[{h}_{fft}^{′}{{h}_{fft}^{′}}^{H}\right]$

Living body component transfer function matrix h'_{fft} is present for each frequency that may include vibration caused by the living body after the Fourier transform on h', and E[•] in Equation 5 denotes the average processing in the frequency direction.

### [Estimator 26]

Estimator 26 performs ranging according to the MUSIC method, using correlation matrix R'_{f} calculated by living body correlation matrix calculator 25. In other words, estimator 26 estimates distance using the MUSIC method. First, estimator 26 performs Eigendecomposition of correlation matrix R'_{f}, and calculates eigenvector U_{S}' corresponding to a signal and eigenvector U_{N}' corresponding to noise. Here, eigenvectors corresponding to a signal are the vectors counted in order from a first eigenvector to the number of targets to be ranged, and is, for example, only the first eigenvector when the target is one person. Furthermore, when the targets are k persons (k being a natural number greater than or equal to 2), the eigenvectors corresponding to a signal are the k eigenvectors from the first eigenvector to the k-th eigenvector. In addition, eigenvectors corresponding to noise refers to eigenvectors other than the eigenvectors corresponding to a signal.

Music spectrum P_{MUSIC}(I) is calculated according to the following equation, using eigenvectors obtained in the above-described manner.
[Math 6] ${P}_{MUSIC} \left(l\right) = \frac{{a}^{H} \left(l\right) a \left(l\right)}{{a}^{H} \left(l\right) {U}_{N} {{U}^{H}}_{N} a \left(l\right)}$ Here, a(d) represents a steering vector, and is calculated as follows.
[Math 7] $a \left(l\right) = {\left[1, {e}^{- j \frac{2 π}{λ} l}, …, {e}^{- j \frac{2 π}{λ} l \left(S-1\right)}\right]}^{T}$ I which takes the maximum value of MUSIC spectrum P_{MUSIC}(I) obtained in the above manner corresponds to the distance a + b in FIG. 2, that is, the sum (i.e., third distance) of the distance between the transmission antenna and living body 50 (i.e., first distance) and the distance between the reception antenna and living body 50 (i.e., second distance). In other words, estimator 26 can calculate the third distance by calculating maximum value I. In this manner, estimator 26 estimates the third distance that is the sum of the first distance between transmission antenna 11 and living body 50 and the second distance by using the living body correlation matrix calculated for each of the plurality of subcarriers.

FIG. 7 is a schematic diagram illustrating the position of the living body which is limited by the relationship between the living body, the transmission antenna element, and the reception antenna element, and by the third distance.

As illustrated in FIG. 7, by estimating the third distance, it can be seen that the position of living body 50 in a plane is limited to the circumference of ellipse 1203 which has the positions of transmission antenna 11 and reception antenna 21 as foci.

It should be noted that, as illustrated in FIG. 8, the position of living body 50 may be estimated from the intersection points of ellipses by using three or more transmission antennas or reception antennas and estimating a plurality of third distances.

FIG. 8 is a schematic diagram illustrating the estimation of the position of a living body by using a plurality of reception antenna elements.

Reception antenna 21 of estimation device 10 in this case includes three reception antenna elements 21a, 21b, and 21c. It should be noted that it is sufficient that reception antenna 21 includes three or more reception antenna elements, and is not limited to having three reception antenna elements. Moreover, instead of reception antenna 21 including three or more reception antenna elements, transmission antenna 11 may include three or more transmission antenna elements.

Accordingly, for each of the three combinations (that is, the M × N combinations) including the combination of the transmission antenna element of transmission antenna 11 and reception antenna element 21a, the combination of the transmission antenna element and reception antenna element 21b, and the combination of the transmission antenna element and reception antenna element 21c, the ellipse which has the positions of the transmission antenna element and reception antenna element included in the combination as foci and the length of its major axis as a third distance is calculated, and the position of living body 50 is estimated based on the three (that is, M × N) intersection points that are closest to each other among the intersection points between the three (that is, M × N) ellipses obtained from the calculation.

### [Operation of estimating device 10]

The operation in the estimation process by estimating device 10 configured in the above-described manner will be described. FIG. 9 is a flowchart illustrating the estimation process by estimating device 10 according to the present embodiment.

First, estimating device 10 calculates the calibration value (S100). Details of the processing in step S100 will be described with reference to FIG. 10.

Next, estimation device 10 performs ranging for the third distance based on the calculated calibration value (S200). Details of the processing in step S200 will be described with reference to FIG. 11.

FIG. 10 is a flowchart illustrating the detailed processing involved in the calibration value calculation in step S100.

First, estimating device 10 transmits, from the transmission antenna element, a multicarrier signal obtained by modulating S subcarriers (S101).

Then, for a second period in which a living body and other moving bodies are not present in a predetermined space which is the estimation target area, estimating device 10 transmits the multicarrier signal from the transmission antenna element and measures received reception signals using the reception antenna element (S102).

Next, estimating device 10 performs multicarrier demodulation on the reception signals measured in the second period to demodulate the reception signals into S signal columns (S103).

Next, for each of the subcarriers, estimating device 10 calculates, from the reception signal of the subcarrier measured in the second period, complex transfer functions indicating the propagation characteristics between the transmission antenna element and the reception antenna element (S104). This process is performed in parallel or sequentially for the respective subcarriers. Since the details are as described above, description will be omitted here. The same applies to the following steps.

Next, estimation device 10 calculates ideal channel h_{ideal} from the distance between the transmission antenna element and the reception antenna element provided in advance (S105).

Next, estimation device 10 calculates calibration value h_{cal} according to Equation 2, based on ideal channel h_{ideal} and the measured channel hₘₑₐₛ (S106).

FIG. 11 is a flowchart illustrating the detailed processing in the ranging in step S200.

First, estimating device 10 transmits, from the transmission antenna element, a multicarrier signal obtained by modulating S subcarrier signals (S201).

Then, for a first period equivalent to a cycle derived from an activity of living body 50, estimation device 10 measures the reception signals that are received by the N reception antenna elements and include reflected signals which is the multicarrier signal transmitted by the M transmission antenna elements that has been reflected or dispersed by living body 50 (S202).

Next, estimating device 10 performs multicarrier demodulation on the reception signals measured in the first period to demodulate the reception signals into S signal columns (S203).

Next, for each of the M × N combinations of the M transmission antenna elements and the N reception antenna elements, estimation device 10 calculates, from the M × N reception signals measured in the first period with respect to each of the subcarrier signals, a plurality of complex transfer functions indicating propagation characteristics between the transmission antenna element and the reception antenna element in the combination, for each of the subcarriers corresponding to a different one of the subcarrier signals (S204).

Next, estimation device 10 calculates calibrated complex transfer function matrix h' according to Equation 3, using calibration value h_{cal} (S205).

Next, estimation device 10 calculates living body component transfer function matrix h'_{fft} from calibrated complex transfer function matrix h', calculates time domain living body component transfer function matrix h'_{ifft} by further performing inverse Fourier transform in the subcarrier direction on living body component transfer function matrix h'_{fft}, and calculates living body component correlation matrix R'_{f} according to Equation 5 (S206). In other words, for each of the subcarriers and each of the M × N combinations, estimation device 10 (i) successively records the calculated complex transfer function in time-series which is the order in which the reception signals are measured, and (ii) extracts components related to the living body from the complex transfer functions successively recorded in time-series, to thereby calculate a living body correlation matrix having M × N rows and columns for each of the subcarriers.

Next, estimation device 10 calculates Music spectrum P_{MUSIC}(I) according to Equation 6 (S207).

Lastly, estimation device 10 searches for I which takes the maximum value of MUSIC spectrum P_{MUSIC} (I), and outputs the search result as a third distance which is the sum of a first distance between the transmission antenna element and living body 50 and a second distance between living body 50 and the reception antenna element (S208).

### [Advantageous effects, etc.]

According to estimation device 10 and the estimation method according to the present embodiment, by using a multicarrier signal such as OFDM for the transmission signal, an existing multicarrier transceiver can be repurposed to be able to estimate the distance between a living body and an antenna. Furthermore, using the MUSIC method enables ranging with fine distance resolution. In simulations, positioning with an error median value of approximately 1 m was possible using a signal having a bandwidth of 20 MHz.

### [Embodiment 2]

Although estimation device 10 described in Embodiment 1 used the single input single output (SISO) scheme in which there are one of both the transmission antenna element and the reception antenna element, the estimation device can also be applied to a single input multiple output (SIMO) or multiple input single output (MISO) scheme in which one of the reception antenna element or the transmission antenna element comprise a plurality of antenna elements.

In Embodiment 2, the case of the MISO scheme in which the transmission antenna is plural in number.

### [Configuration of estimating device 100]

FIG. 12 is a block diagram illustrating an example of the configuration of estimating device 100 according to Embodiment 2. FIG. 13 is a diagram illustrating an example of a detection target of estimating device 100 illustrated in FIG. 12.

Estimation device 100 illustrated in FIG. 12 includes transmission antenna 111, transmitter 12, transmission signal generator 13, reception antenna 21, receiver 22, complex transfer function calculator 123, calibrator 124, living body correlation matrix calculator 125, estimator 126, angle estimator 127, and positioner 128. Estimation device 100 estimates the position of living body 50 using estimating device 100 as a directional or positional reference.

### [Transmission antenna 111]

Transmission antenna 111 includes M (M is at least 2) transmission antenna elements. As described above, the transmission antenna elements transmit a multicarrier signal (transmission wave) generated by transmitter 12 to be described later.

### [Transmission signal generator 13]

Transmission signal generator 13 generates a multicarrier signal obtained by modulating a plurality of subcarrier signals for each transmission antenna element included in transmission antenna 111. In the present embodiment, as in Embodiment 1, transmission signal generator 13 is exemplified as generating an OFDM signal which has a high frequency band utilization efficiency and consists of S subcarriers. However, aside from generating an OFDM signal in which respective subcarriers are orthogonal, other multicarrier signals such as a simple frequency division multiplexing (FDM) signal may be generated as long as it is a multicarrier signal obtainable by multicarrier modulation.

Furthermore, the signal generated by transmission signal generator 13 may be a signal that is shared with a signal used for communication.

### [Transmitter 12]

Transmitter 12 adds appropriate processing to the signal generated by transmission signal generator 13, to generate a transmission wave. The processing carried out here includes, for example, up-conversion in which the signal is converted from the intermediate frequency (IF) frequency band to the radio frequency (RF) frequency band, amplification in which the signal is amplified to the appropriate transmission level, etc. Then, as illustrated in FIG. 13, transmitter 12 outputs the processed multicarrier signal to transmission antenna 111 to thereby cause transmission antenna 111 to transmit the multicarrier signal. With this, the multicarrier signal is transmitted from the M (M is greater than or equal to 2) transmission antenna elements included in transmission antenna 111.

### [Reception antenna 21]

Reception antenna 21 includes N reception antenna elements. Here, N is a natural number greater than or equal to 1. In the present embodiment, reception antenna 21 includes one reception antenna element. Then, for example, as illustrated in FIG. 13, the one reception antenna element receives signals that were transmitted by the M transmission antenna elements and reflected by living body 50 (i.e., reception signals).

### [Receiver 22]

Receiver 22 measures, for a first period equivalent to a cycle derived from an activity of living body 50, the reception signals that are received by the single reception antenna element and include reflected signals which are the multicarrier signals transmitted from the M transmission antenna elements that have been reflected or dispersed by living body 50. A cycle derived from the activity of the living body is a living body-derived cycle (living body fluctuation cycle) which is a time period greater than or equal to a half-cycle of any of the cycles of respiration, heartbeat, and body motion of living body 50.

Receiver 22 converts the high-frequency signal received by the single reception antenna element into a low-frequency signal on which signal processing can be performed. Then, receiver 22 demodulates the M OFDM signals transmitted by the M transmission antenna elements into S × M subcarrier signals. Each of the S × M subcarrier signals is represented by an IQ symbol. Receiver 22 outputs, to complex transfer function calculator 23, the S × M sets of subcarrier signals obtained by converting the high-frequency signal received by the N (one in the present embodiment) reception antenna elements, for at least the first period.

It should be noted that, receiver 22 may continue to measure the reception signals already received by reception antenna 21, and continuously or periodically transmit the S × M subcarrier signals (IQ symbols) to complex transfer function calculator 23.

### [Complex transfer function calculator 123]

Complex transfer function calculator 123, using the reception signals measured in the first period by receiver 22, calculates, for each of the subcarriers to which the subcarrier signals correspond, a plurality of complex transfer functions indicating propagation characteristics between a transmission antenna element and a reception antenna element in each of M × N combinations which are the combinations of each of the M transmission antenna elements and each of the N reception antenna elements. It should be noted that the M × N combinations are all the obtainable one-to-one combinations between the M transmission antenna elements and the N reception antenna elements.

In this embodiment, complex transfer function calculator 123 calculates, using the S × M subcarrier signals transmitted from receiver 22, complex transfer functions indicating the propagation characteristics between each of the transmission antenna elements and each of the reception antenna elements, for each of the S subcarrier signals.

It should be noted that the calculated complex transfer function matrix also includes reflected waves that did not arrive via living body 50, such as direct waves and reflected waves derived from a fixed object.

The method of calculating complex transfer functions from one subcarrier signal includes, for example, a method of dividing a reception IQ symbol by a known signal such as a pilot signal or a guard interval signal. In the present embodiment, in order to focus on the phase difference between the S subcarrier signals, subcarrier signal S0, which serves as a reference, is used to divide the other subcarrier signals. Specifically, among the elements of the complex transfer function matrix having M rows and S columns, an element that will serve as a reference may be determined, and the complex transfer function matrix at each time point may be normalized (divided) by the element serving as the reference. With this operation, noise arising from the variance between the operation clocks of the transmitter and the receiver can also be removed. It should be noted that the element of the complex transfer function that will serve as a reference may be the average of the elements of the complex transfer functions, or may be a direct wave component obtained by Eigendecomposition of a correlation matrix of the complex transfer functions.

Complex transfer function calculator 123 calculates the complex transfer functions for each of the S subcarrier signals, and outputs the obtained S complex transfer function matrices to calibrator 124.

It should be noted that complex transfer function calculator 123 may constantly calculate the complex transfer function matrix, either continuously or on a regular basis, using each of the subcarrier signals outputted by receiver 22. By adopting this configuration, when estimating device 10 shares the hardware of a communication device, the complex transfer function matrix that is normally calculated for use in processing by the communication device can also be used by estimating device 100.

It should be noted that, whereas the complex transfer functions are outputted as is to calibrator 24 in Embodiment 1, in the present embodiment, singular value decomposition is performed on the complex transfer function matrix according to the following equation.
[Math 8] $h = U Σ {V}^{H}$ Here, H represents a Hermitian matrix. Matrix V obtained in the above manner is outputted to calibrator 124 located downstream. By doing so, the amount of data to be transmitted downstream can be reduced. It should be noted the complex transfer functions may be transmitted in the same manner as in Embodiment 1, and, in such a case, the same processing is possible by replacing V with h.

### [Calibrator 124]

Calibrator 124 obtains the calculated matrix V, and performs calibration for phase error in the frequency direction. Here, a phase error in the frequency direction refers to, among differences with respect to the phase of subcarrier signal S0 used as a reference calculated by complex transfer function calculator 123, a phase difference not resulting from spatial propagation between the antennas. Specifically, the phase error includes the influence of the frequency characteristics of transmission antenna 111 and reception antenna 21, the electrical length of the internal circuitry of transmitter 12, the electrical length of the internal circuitry of receiver 22, and so on. The phase error includes phase difference e^{jΦtx} caused by transmission antenna 111 and transmitter 12 and phase error e^{jΦrx} caused by reception antenna 21 and receiver 22.

The matrix V received by calibrator 124 is expressed using the following equation.
[Math 9] $V = \left(\begin{matrix}{v}_{1 1} & ⋯ & {v}_{1 S} \\ ⋮ & ⋱ & ⋮ \\ {v}_{M 1} & ⋯ & {v}_{MS}\end{matrix}\right)$

Calibrator 124 performs calibration on each row of matrix V, that is, for each antenna, based on a frequency direction calibration value calculated using a predetermined method. Here, the method of performing correction will be described focusing on the j-th row. First, calibrator 124 calculates h_{ideal} which is the ideal inter-antenna element channel, based on distance dⱼ between the j-th transmission antenna element and reception antenna element that is inputted in advance. Here, h_{ideal} is a vector represented by the complex number, and h_{ideal} has S elements which is the subcarrier number. The i-th element is calculated as follows.
[Math 10] ${h}_{ideal \left(i\right)} = exp \left(-{jk}_{i}{d}_{j}\right)$ Here, kᵢ is the wavenumber of the i-th subcarrier. In this manner, h_{ideal} is an ideal complex transfer function between the transmission antenna element and the reception transmission element obtainable based on the inter-antenna distance between the transmission antenna element and the reception transmission element.

Next, calibrator 124 obtains, from complex transfer function calculator 123, a reference complex transfer function matrix that includes M × N complex transfer functions measured in a second period, and serves as a reference. It should be noted that measurement of the reference complex transfer function matrix is preferably performed in a person-free state in which there is little influence from a living body, but may include the influence of a living body. An initial complex transfer function matrix obtained from complex transfer function calculator 123 may be used for the reference complex transfer function matrix. Furthermore, calibrator 124 may calculate a new reference complex transfer function matrix based on data of a timing at which fluctuation obtained by simultaneously calculating the temporal fluctuations of absolute values of complex transfer functions is small, and update the reference complex transfer function matrix with the new reference complex transfer function matrix calculated. In the present embodiment, since there are M transmission antenna elements and one reception antenna element, the reference complex transfer matrix is the matrix hₘₑₐₛ having an element number of S × M. Thereafter, calibrator 124 calculates reference matrix V vₘₑₐₛ by singular value decomposition in the same manner as the complex transfer function matrix measured in the first period.

Next, calibrator 24 calculates the correction value for correcting the phase errors in the subcarrier direction, based on the ideal channel h_{ideal} and the reference complex transfer function (channel hₘₑₐₛ). Specifically, calibrator 124 calculates the difference between h_{ideal} which is the ideal channel obtained by calculation, and the measured reference matrix V vₘₑₐₛ, and sets the difference as the correction value (calibration value) v_{cal}. Specifically, v_{cal} is calculated through the following calculation.
[Math 11] 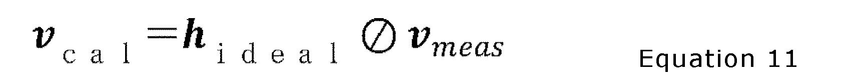 Replacement between matrix V and channel h is possible, and the calibration value can be calculated using h_{ideal} in the same manner as in Embodiment 1. Since calibration value v_{cal} is the same as long as the reference complex transfer function matrix does not change, it is desirable to store the value in a memory, or the like, and use the stored value as calibration value v_{cal} from the next time onward.

Lastly, calibrator 124 performs calibration (correction) of matrix V v according to the following equation, based on calibration value v_{cal}.
[Math 12] $v ′ = ∠ {v}_{cal} ∘ v$ Here, ∠*v*_{cal} represents the phase angle of ***v***_{c a l}. Furthermore, ∘ represents the Hadamard product which is the per element product.

Calibrator 124 also performs the same correction on the rows of matrix V which correspond to other transmission antennas, and outputs the calibrated matrix V V' to living body correlation matrix calculator 125 and angle estimator 127 located downstream.

### [Living body correlation matrix calculator 125]

For each of the subcarriers and each of the M × N combinations, living body correlation matrix calculator 125 successively records, in the time-series order in which the reception signals are measured, the plurality of calibrated V matrices calculated by calibrator 124. Then, living body correlation matrix calculator 125 extracts, for each of the subcarriers and each of the M × N combinations, components of the living body from the calibrated matrix V V' recorded in time series and measured for the first time period, to thereby calculate, for each of the subcarriers, a living body component transfer function matrix expressed by a M × N-dimension matrix.

Here, the living body component transfer function matrix is the extracted reflected wave or dispersed wave (living body component) included in the reception signal that passed via living body 50. The methods of calculating the living body component from the complex transfer functions recorded in time-series include the method using Fourier transform disclosed in PTL 1 and the method using difference information disclosed in PTL 2.

For example, with the method that uses Fourier transform, by performing Fourier transform on matrix V V' for the measurement time (slow time) and extracting only specific frequency components, living body component matrix V V'_{fft} can be calculated. Here, living body component matrix V V'_{fft} is calculated for each of frequency components included in the frequencies, for example, 0.1 Hz to 3 Hz, which can include the influence of activities of the living body. In the same manner as in Embodiment 1, by further performing inverse Fourier transform in the subcarrier direction on this living body component matrix V V'_{fft} and calculating time domain living body component matrix V V'_{ifft}, the time from when a signal including a living body component is transmitted from the transmitter until it is received by the receiver can be calculated. However, temporal resolution Δt of time that is calculated here is expressed by
[Math 13] $Δt = \frac{1}{B} \left[s\right]$ using bandwidth B of the subcarrier. For example, when the bandwidth is 20 MHz, the temporal resolution is equivalent to 0.5 µs or approximately 15 m when converted to distance resolution, which does not stand up to practical use.

In view of this, in the present embodiment, resolution is improved by using the multiple signal classification (MUSIC) method. In order to use the MUSIC method, living body correlation matrix calculator 125 calculates correlation matrix R'_{f} of living body component matrix V V'_{fft} according to the following equation.
[Math 14] $R {′}_{f} = E \left[v{′}_{fft \left(m\right)}v{{′}_{fft \left(m\right)}}^{H}\right]$

Here, E[•] in Equation 14 indicates the average arithmetic processing in the frequency direction that may include the influence of the living body, in the column direction, that is, for each transmission antenna, and m indicates the index number from 1 to M of the transmission antennas.

### [Estimator 126]

Estimator 126 performs ranging according to the MUSIC method, using correlation matrix R'_{f} calculated by living body correlation matrix calculator 125. In other words, estimator 126 estimates distance using the MUSIC method. First, estimator 126 performs Eigendecomposition of correlation matrix R'_{f}, and calculates eigenvector US' corresponding to a signal and eigenvector U_{N}' corresponding to noise. Here, eigenvectors corresponding to a signal are the vectors counted in order from a first eigenvector to the number of targets to be ranged, and is, for example, only the first eigenvector when the target is one person. Furthermore, when the targets are k persons (k being a natural number greater than or equal to 2), the eigenvectors corresponding to a signal are the k eigenvectors from the first eigenvector to the k-th eigenvector. In addition, eigenvectors corresponding to noise refers to eigenvectors other than the eigenvectors corresponding to a signal.

Music spectrum P_{MUSIC}(I) is calculated according to the following equation, using the eigenvectors obtained in the above-described manner.
[Math 15] ${P}_{MUSIC} \left(l\right) = \frac{{a}^{H} \left(l\right) a \left(l\right)}{{a}^{H} \left(l\right) {U}_{N} {U}^{H} a N \left(l\right)}$ Here, a(d) represents a steering vector, and is calculated as follows.
[Math 16] $a \left(l\right) = {\left[1,{e}^{- j \frac{2 π}{λ} l},…,{e}^{- j \frac{2 π}{λ} l \left(S-1\right)}\right]}^{T}$ I which takes the maximum value of MUSIC spectrum P_{MUSIC}(I) obtained in the above manner corresponds to the sum (third distance) of distance a (first distance) between transmission antenna elements and living body 50 and distance b (second distance) between a reception antenna element and living body 50 in FIG. 13. In other words, estimator 126 can calculate the third distance by calculating maximum value I. In this manner, estimator 126 estimates the third distance that is the sum of the first distance between transmission antenna 111 and living body 50 and the second distance, by using the living body correlation matrix calculated for each of the plurality of subcarriers.

Estimator 126 outputs, to positioner 128, the estimated sum of distance a (first distance) between the transmission antenna elements and living body 50 and distance b (second distance) between the reception antenna element and living body 50, as third distance L.

### [Angle estimator 127]

Angle estimator 127 estimates the angle (direction) in which living body 50 is located when seen from transmission antenna 111 (that is, estimation device 100), using the calibrated matrix V calculated by calibrator 124. In the present embodiment, since signals are transmitted from a plurality of transmission antenna elements, incoming angle estimation using the MUSIC method described in PTL 1, for example, can be used for the estimation. It should be noted that although the angle from a transmission antenna element is estimated in the present embodiment, a device including a plurality of reception antenna elements may be used and the angle from a reception antenna element may be estimated.

Angle estimator 127 transmits, to positioner 128, first angle θ which is the estimated angle in which living body 50 is located.

### [Positioner 128]

Positioner 128 estimates the coordinates of living body 50, based on third distance L estimated by estimator 126 and first angle θ estimated by angle estimator 127. FIG. 14 illustrates the relationship between living body 50, transmission antenna 111, reception antenna 21, third distance L, and first angle θ. When third distance L equivalent to the sum of first distance a and second distance b in FIG. 14 is defined, it is understood that the position of living body 50 is on the circumference of ellipse 1203, and, since first angle θ which is the angle from transmission antenna 111 is also defined, the position of living body 50 is determined to be at one point on the circumference of ellipse 1203. Hereinafter, the method for calculating the coordinates of living body 50 will be described using mathematical expressions.

First, positioner 128 calculates first distance a based on the law of cosines, using third distance L, first angle θ, and inter-antenna distance d. The specific equation is as indicated below.
[Math 17] $\begin{matrix}{\left(L-a\right)}^{2} = {a}^{2} + {d}^{2} - 2 ad cos θ \\ a \left(2dcosθ-2L\right) = {d}^{2} - {L}^{2} \\ ∴ a = \frac{{L}^{2} - {d}^{2}}{2 \left(L-dcosθ\right)}\end{matrix}$

Lastly, positioner 128 calculates the coordinates (x, y) of living body 50 according to the following equation, using first distance a and first angle θ.
[Math 18] $\left(x, y\right) = \left(acosθ, asinθ\right)$

It should be noted that although description is carried out in the present embodiment with the number of living bodies present being one, even when the number of living bodies is two or more, it is possible to estimate the third distance and the first angle for each of the living bodies, then estimate the combination of the third distance and the first angle from the magnitude correlation of the Eigenvalues of the correlation matrix, and calculate the coordinates of each living body, as illustrated in FIG. 15. Furthermore, by expanding the steering vector to be used during MUSIC spectrum calculation into the two dimensions of distance and angle, the combinations of third distances and first angles of a plurality of persons can be estimated simultaneously. It should be noted that by further expanding the dimensions of the steering vector, the distance and the angle from a different transmission or reception antenna element can be estimated at the same time.

### [Operation of estimating device 100]

The operation in the estimation process by estimating device 100 configured in the above-described manner will be described. FIG. 16 is a flowchart illustrating the estimation process by estimating device 100 according to Embodiment 2.

Estimation device 100 first calculates the calibration value (S1000).

Next, estimation device 100 performs ranging for third distance L based on the calculated calibration value (S1100). In addition, estimation device 100 estimates first angle θ which is the angle of living body 50 with respect to estimation device 100, in parallel with or before or after the ranging (S1200).

Lastly, estimation device 100 estimates the position of living body 50 based on third distance L and first distance θ (S1300). Since the processing in each step has been previously described, description will be omitted.

### [Advantageous Effects, etc.]

According to the present embodiment, the coordinates of a living body can be estimated even when using an estimating device having a MISO or SIMO configuration.

As described above, the present disclosure can realize an estimating device and an estimating method that are capable of quickly and accurately estimating the distance or position of a living body by using radio signals.

For example, although estimation of the distance or position of living body 50 is described as an example in Embodiments 1 and 2, the present disclosure is not limited to living body 50. The present disclosure can be applied to various moving bodies (machines, etc.) whose activity imparts a Doppler effect on reflected waves in the case where a high-frequency signal is emitted.

Furthermore, the present disclosure can be realized, not only as a positioning sensor including the above-described characteristic structural elements, but also as an estimating method including, as steps, the characteristic structural elements included in the positioning sensor. Furthermore, the present invention can also be realized as a computer program that causes a computer that constitutes the estimating device to execute the respective steps included in such a method. In addition, it should be obvious that such a program can be distributed via a non-transitory computer-readable recording medium such as CD-ROM or a communication network such as the Internet.

### [Industrial Applicability]

The present disclosure can be used in a positioning sensor and a distance estimating method for estimating the distance or position of a living body by using radio signals, and can be used particularly in a ranging sensor and a direction estimating method provided to a measuring device that measures the distance or position of a living body including a living body and a machine, a household appliance that performs control according to the distance or position of a living body, a monitoring device that detects incursion of a living body, and so on.

### [Reference Signs List]

10, 100 estimating device
11 transmission antenna
12 transmitter
13 transmission signal generator
21 reception antenna
22 receiver
23, 123 complex transfer function calculator
24, 124 calibrator
25, 125 living body correlation matrix calculator
26, 126 estimator
127 angle estimator
128 positioner
50 living body
101 path from transmission antenna up to living body
102 path from reception antenna up to living body
1101, 1102 change in phase with respect to frequency of complex correlation matrix
1202, 1201 phase after inverse Fourier transform of complex transfer function matrix
1203, 1203a, 1203b, 1203c ellipse

## Claims

1. An estimating device (10, 100) that estimates a distance to a living body (50), the estimating device (10) comprising:
a transmission signal generator (13) that generates a multicarrier signal obtained by modulating a plurality of subcarrier signals;
a transmission antenna (11) including M transmission antenna elements, where M is a natural number greater than or equal to 1;
a transmitter (12) that causes the transmission antenna (11) to transmit the multicarrier signal, by processing and outputting the multicarrier signal to the transmission antenna (11);
a reception antenna (21) including N reception antenna elements, where N is a natural number greater than or equal to 1;
a receiver (22) that measures, for a first period equivalent to a cycle derived from an activity of the living body (50), a plurality of reception signals which are received by each of the N reception antenna elements and include a reflected signal which is the multicarrier signal transmitted from each of the M transmission antenna elements that has been reflected or dispersed by the living body (50);
a complex transfer function calculator (23, 123) that calculates a plurality of complex transfer functions for each of a plurality of subcarriers to which the plurality of subcarrier signals correspond, using the plurality of reception signals measured by the receiver (22) in the first period, the plurality of complex transfer functions indicating a propagation characteristic between a transmission antenna element and a reception antenna element in each of M × N combinations which are combinations of each of the M transmission antenna elements and each of the N reception antenna elements;
a living body correlation matrix calculator (25, 125) that calculates, for each of the plurality of subcarriers, a living body correlation matrix having M rows × N columns by (i) recording sequentially in time series, which is an order in which the plurality of reception signals are measured, the plurality of complex transfer functions calculated by the complex transfer function calculator and (ii) extracting components relating to the living body (50) from the plurality of complex transfer functions recorded sequentially in time series, the (i) recording and the (ii) extracting being performed for each of the plurality of subcarriers and each of the M × N combinations; and
an estimator (26, 126), **characterized in that** the estimator calculates, using the living body correlation matrix calculated for each of the plurality of subcarriers, a spectrum based on a multiple signal classification, MUSIC, method, and estimates, as a third distance, a distance for which the spectrum becomes a maximum value, wherein
the third distance is a sum of a first distance between the transmission antenna (11) and the living body (50) and a second distance between the reception antenna (21) and the living body (50).

2. The estimating device according to claim 1, wherein
the living body correlation matrix calculator (25, 125) calculates, for each of the plurality of subcarriers, the living body correlation matrix having M rows × N columns, by normalizing a complex transfer function matrix at each time point of the plurality of complex transfer functions recorded sequentially in time series, using an element that serves as a reference of the complex transfer function matrix, and extracting the components relating to the living body (50) from the plurality of complex transfer functions normalized.

3. The estimating device according to claim 1, further comprising:
a calibrator (24, 124) that calculates a correction value for correcting a phase error in a subcarrier direction based on (i) ideal complex transfer functions between the M transmission antenna elements and the N reception antenna elements obtainable based on an inter-antenna distance between the M transmission antenna elements and the N reception antenna elements and (ii) a reference complex transfer function matrix including M × N complex transfer functions measured in a second period, and corrects the plurality of complex transfer functions for the first period.

4. The estimating device (10, 100) according to any one of claims 1 to 3, wherein
at least one of M or N is greater than or equal to 2, and
the estimating device (10, 100) further comprises:
an angle estimator (127) that calculates, using the plurality of complex transfer functions calculated by the complex transfer function calculator, a first angle that is an angle defined by two or more antenna elements among the M transmission antenna elements and the N reception antenna elements; and
a positioner (128) that calculates the first distance from the first angle and the third distance, and calculates a position of the living body (50).

5. The estimating device (10, 100) according to any one of claims 1 to 3, wherein
at least one of M or N is greater than or equal to 3, and
the estimator (26, 126) calculates, for each of the M × N combinations, an ellipse (1203) in which positions of the transmission element and the reception antenna element included in the combination are foci and a length of a major axis is the third distance, and estimates a position of the living body (50) based on, among intersections of the M × N ellipses obtained by calculation, M × N intersections that are closest to each other.

6. The estimating device (10, 100) according to any one of claims 1 to 5, wherein
the living body correlation matrix calculator (25, 125) calculates the living body correlation matrix by performing inverse Fourier transform in a subcarrier direction on the plurality of complex transfer functions.

7. An estimating method performed by an estimating device (10, 100) including a transmission antenna (11) including M transmission antenna elements, where M is a natural number greater than or equal to 1, and a reception antenna (21) including N reception antenna elements, where N is a natural number greater than or equal to 1, the estimating method comprising:
generating a multicarrier signal obtained by modulating a plurality of subcarrier signals;
causing the transmission antenna to transmit the multicarrier signal, by processing and outputting the multicarrier signal to the transmission antenna (11);
measuring, for a first period equivalent to a cycle derived from an activity of a living body (50), a plurality of reception signals which are received by each of the N reception antenna elements and include a reflected signal which is the multicarrier signal transmitted from each of the M transmission antenna elements that has been reflected or dispersed by the living body (50);
calculating a plurality of complex transfer functions for each of a plurality of subcarriers to which the plurality of subcarrier signals correspond, using the plurality of reception signals measured in the first period, the plurality of complex transfer functions indicating a propagation characteristic between a transmission antenna element and a reception antenna element in each of M × N combinations which are combinations of each of the M transmission antenna elements and each of the N reception antenna elements;
calculating, for each of the plurality of subcarriers, a living body correlation matrix having M rows × N columns by (i) recording sequentially in time series, which is an order in which the plurality of reception signals are measured, the plurality of complex transfer functions calculated and (ii) extracting components relating to the living body from the plurality of complex transfer functions recorded sequentially in time series, the (i) recording and the (ii) extracting being performed for each of the plurality of subcarriers and each of the M × N combinations; **characterized by**
calculating, using the living body correlation matrix calculated for each of the plurality of subcarriers, a spectrum based on a multiple signal classification, MUSIC, method, and estimating, as a third distance, a distance for which the spectrum becomes a maximum value, wherein
the third distance is a sum of a first distance between the transmission antenna (11) and the living body (50) and a second distance between the reception antenna (21) and the living body (50).

8. The estimating method according to claim 7, wherein
in the calculating of the living body correlation matrix having M rows × N columns, the living body correlation matrix having M rows × N columns is calculated, for each of the plurality of subcarriers, by normalizing a complex transfer function matrix at each time point of the plurality of complex transfer functions recorded sequentially in time series, using an element that serves as a reference of the complex transfer function matrix, and extracting the components relating to the living body (50) from the plurality of complex transfer functions normalized.

9. A program for causing a computer that constitutes the estimating device of any one of claims 1 to 6 to execute the estimating method according to claim 7 or claim 8.

## Patentansprüche

1. Schätzvorrichtung (10, 100), die einen Abstand zu einem lebenden Körper (50) schätzt, wobei die Schätzvorrichtung (10) umfasst:
einen Sendesignalgenerator (13), der ein Mehrträgersignal erzeugt, das durch Modulation einer Vielzahl von Unterträgersignalen erhalten wird;
eine Sendeantenne (11), die M Sendeantennenelemente umfasst, wobei M eine natürliche Zahl größer oder gleich 1 ist;
einen Sender (12), der die Sendeantenne (11) veranlasst, das Mehrträgersignal zu senden, indem er das Mehrträgersignal verarbeitet und an die Sendeantenne (11) ausgibt;
eine Empfangsantenne (21), die N Empfangsantennenelemente umfasst, wobei N eine natürliche Zahl größer oder gleich 1 ist;
einen Empfänger (22), der für eine erste Zeitdauer, die einem aus einer Aktivität des lebenden Körpers (50) abgeleiteten Zyklus entspricht, eine Vielzahl von Empfangssignalen misst, die von jedem der N Empfangsantennenelemente empfangen werden und ein reflektiertes Signal umfassen, welches das von jedem der M Sendeantennenelemente gesendete Mehrträgersignal ist, das durch den lebenden Körper (50) reflektiert oder gestreut wurde;
einen Berechner für komplexe Übertragungsfunktionen (23, 123), der eine Vielzahl von komplexen Übertragungsfunktionen für jeden einer Vielzahl von Unterträgern, denen die Vielzahl von Unterträgersignalen entspricht, unter Verwendung der vom Empfänger (22) in der ersten Zeitdauer gemessenen Vielzahl von Empfangssignalen berechnet, wobei die Vielzahl von komplexen Übertragungsfunktionen eine Ausbreitungscharakteristik zwischen einem Sendeantennenelement und einem Empfangsantennenelement in jeder von M × N Kombinationen angibt, welche Kombinationen von jedem der M Sendeantennenelemente und jedem der N Empfangsantennenelemente sind;
einen Berechner für eine Korrelationsmatrix des lebenden Körpers (25, 125), der für jeden der Vielzahl von Unterträgern eine Korrelationsmatrix des lebenden Körpers mit M Zeilen × N Spalten berechnet, indem (i) die durch den Berechner für komplexe Übertragungsfunktionen berechnete Vielzahl von komplexen Übertragungsfunktionen sequentiell in einer Zeitreihe, welche eine Reihenfolge ist, in der die Vielzahl von Empfangssignalen gemessen wird, aufgezeichnet wird, und (ii) Komponenten, die sich auf den lebenden Körper (50) beziehen, aus der Vielzahl von komplexen Übertragungsfunktionen, die sequentiell in einer Zeitreihe aufgezeichnet sind, extrahiert werden, wobei das (i) Aufzeichnen und das (ii) Extrahieren für jeden der Vielzahl von Unterträgern und jede der M × N Kombinationen durchgeführt werden; und
einen Schätzer (26, 126), **dadurch gekennzeichnet, dass** der Schätzer unter Verwendung der für jeden der Vielzahl von Unterträgern berechneten Korrelationsmatrix des lebenden Körpers ein Spektrum basierend auf einem Verfahren der Mehrfachsignalklassifizierung, MUSIC, berechnet und als dritten Abstand einen Abstand schätzt, für den das Spektrum einen Maximalwert annimmt, wobei
der dritte Abstand eine Summe aus einem ersten Abstand zwischen der Sendeantenne (11) und dem lebenden Körper (50) und einem zweiten Abstand zwischen der Empfangsantenne (21) und dem lebenden Körper (50) ist.

2. Schätzvorrichtung nach Anspruch 1, wobei
der Berechner für eine Korrelationsmatrix des lebenden Körpers (25, 125) für jeden der Vielzahl von Unterträgern die Korrelationsmatrix des lebenden Körpers mit M Zeilen × N Spalten berechnet, indem eine Matrix komplexer Übertragungsfunktionen zu jedem Zeitpunkt der Vielzahl von komplexen Übertragungsfunktionen, die sequentiell in einer Zeitreihe aufgezeichnet sind, unter Verwendung eines Elements, das als Referenz der Matrix komplexer Übertragungsfunktionen dient, normiert wird, und die Komponenten, die sich auf den lebenden Körper (50) beziehen, aus der Vielzahl von normierten komplexen Übertragungsfunktionen extrahiert werden.

3. Schätzvorrichtung nach Anspruch 1, ferner umfassend:
einen Kalibrator (24, 124), der einen Korrekturwert zum Korrigieren eines Phasenfehlers in einer Unterträgerrichtung basierend auf (i) idealen komplexen Übertragungsfunktionen zwischen den M Sendeantennenelementen und den N Empfangsantennenelementen, die basierend auf einem Inter-Antennen-Abstand zwischen den M Sendeantennenelementen und den N Empfangsantennenelementen erhältlich sind, und (ii) einer Referenzmatrix komplexer Übertragungsfunktionen, die M × N in einer zweiten Zeitdauer gemessene komplexe Übertragungsfunktionen umfasst, berechnet, und die Vielzahl von komplexen Übertragungsfunktionen für die erste Zeitdauer korrigiert.

4. Schätzvorrichtung (10, 100) nach einem der Ansprüche 1 bis 3, wobei
mindestens eines von M oder N größer oder gleich 2 ist, und
die Schätzvorrichtung (10, 100) ferner umfasst:
einen Winkelschätzer (127), der unter Verwendung der vom Berechner für komplexe Übertragungsfunktionen berechneten Vielzahl von komplexen Übertragungsfunktionen einen ersten Winkel berechnet, der ein Winkel ist, der durch zwei oder mehr Antennenelemente unter den M Sendeantennenelementen und den N Empfangsantennenelementen definiert ist; und
einen Positionierer (128), der die erste Distanz aus dem ersten Winkel und dem dritten Abstand berechnet und eine Position des lebenden Körpers (50) berechnet.

5. Schätzvorrichtung (10, 100) nach einem der Ansprüche 1 bis 3, wobei
mindestens eines von M oder N größer oder gleich 3 ist, und
der Schätzer (26, 126) für jede der M × N Kombinationen eine Ellipse (1203) berechnet, in der Positionen des Sendeelements und des Empfangsantennenelements, die in der Kombination enthalten sind, Brennpunkte sind und eine Länge einer Hauptachse der dritte Abstand ist, und eine Position des lebenden Körpers (50) basierend auf, unter Schnittpunkten der durch Berechnung erhaltenen M × N Ellipsen, M × N Schnittpunkten schätzt, die einander am nächsten liegen.

6. Schätzvorrichtung (10, 100) nach einem der Ansprüche 1 bis 5, wobei
der Berechner für eine Korrelationsmatrix des lebenden Körpers (25, 125) die Korrelationsmatrix des lebenden Körpers berechnet, indem er eine inverse Fourier-Transformation in einer Unterträgerrichtung auf die Vielzahl von komplexen Übertragungsfunktionen durchführt.

7. Schätzverfahren, das von einer Schätzvorrichtung (10, 100) durchgeführt wird, die eine Sendeantenne (11) mit M Sendeantennenelementen, wobei M eine natürliche Zahl größer oder gleich 1 ist, und eine Empfangsantenne (21) mit N Empfangsantennenelementen umfasst, wobei N eine natürliche Zahl größer oder gleich 1 ist, wobei das Schätzverfahren umfasst:
Erzeugen eines Mehrträgersignals, das durch Modulation einer Vielzahl von Unterträgersignalen erhalten wird;
Veranlassen der Sendeantenne, das Mehrträgersignal zu senden, indem das Mehrträgersignal verarbeitet und an die Sendeantenne (11) ausgegeben wird;
Messen, für eine erste Zeitdauer, die einem aus einer Aktivität eines lebenden Körpers (50) abgeleiteten Zyklus entspricht, einer Vielzahl von Empfangssignalen, die von jedem der N Empfangsantennenelemente empfangen werden und ein reflektiertes Signal umfassen, welches das von jedem der M Sendeantennenelemente gesendete Mehrträgersignal ist, das durch den lebenden Körper (50) reflektiert oder gestreut wurde;
Berechnen einer Vielzahl von komplexen Übertragungsfunktionen für jeden einer Vielzahl von Unterträgern, denen die Vielzahl von Unterträgersignalen entspricht, unter Verwendung der in der ersten Zeitdauer gemessenen Vielzahl von Empfangssignalen, wobei die Vielzahl von komplexen Übertragungsfunktionen eine Ausbreitungscharakteristik zwischen einem Sendeantennenelement und einem Empfangsantennenelement in jeder von M × N Kombinationen angibt, welche Kombinationen von jedem der M Sendeantennenelemente und jedem der N Empfangsantennenelemente sind;
Berechnen, für jeden der Vielzahl von Unterträgern, einer Korrelationsmatrix des lebenden Körpers mit M Zeilen × N Spalten durch (i) Aufzeichnen, sequentiell in einer Zeitreihe, welche eine Reihenfolge ist, in der die Vielzahl von Empfangssignalen gemessen wird, der berechneten Vielzahl von komplexen Übertragungsfunktionen und (ii) Extrahieren von Komponenten, die sich auf den lebenden Körper beziehen, aus der Vielzahl von komplexen Übertragungsfunktionen, die sequentiell in einer Zeitreihe aufgezeichnet sind, wobei das (i) Aufzeichnen und das (ii) Extrahieren für jeden der Vielzahl von Unterträgern und jede der M × N Kombinationen durchgeführt werden; **gekennzeichnet durch**
Berechnen, unter Verwendung der für jeden der Vielzahl von Unterträgern berechneten Korrelationsmatrix des lebenden Körpers, eines Spektrums basierend auf einem Verfahren der Mehrfachsignalklassifizierung, MUSIC, und Schätzen, als dritten Abstand, eines Abstands, für den das Spektrum einen Maximalwert annimmt, wobei
der dritte Abstand eine Summe aus einem ersten Abstand zwischen der Sendeantenne (11) und dem lebenden Körper (50) und einem zweiten Abstand zwischen der Empfangsantenne (21) und dem lebenden Körper (50) ist.

8. Schätzverfahren nach Anspruch 7, wobei
in dem Berechnen der Korrelationsmatrix des lebenden Körpers mit M Zeilen × N Spalten die Korrelationsmatrix des lebenden Körpers mit M Zeilen × N Spalten für jeden der Vielzahl von Unterträgern berechnet wird, indem eine Matrix komplexer Übertragungsfunktionen zu jedem Zeitpunkt der Vielzahl von komplexen Übertragungsfunktionen, die sequentiell in einer Zeitreihe aufgezeichnet sind, unter Verwendung eines Elements, das als Referenz der Matrix komplexer Übertragungsfunktionen dient, normiert wird, und die Komponenten, die sich auf den lebenden Körper (50) beziehen, aus der Vielzahl von normierten komplexen Übertragungsfunktionen extrahiert werden.

9. Programm zum Veranlassen eines Computers, der die Schätzvorrichtung nach einem der Ansprüche 1 bis 6 bildet, das Schätzverfahren nach Anspruch 7 oder Anspruch 8 auszuführen.

## Revendications

1. Dispositif d'estimation (10, 100) qui estime une distance jusqu'à un corps vivant (50), le dispositif d'estimation (10) comprenant :
un générateur de signal de transmission (13) qui génère un signal multiporteuse obtenu par modulation d'une pluralité de signaux de sous-porteuse ;
une antenne de transmission (11) comprenant M éléments d'antenne de transmission, où M est un nombre naturel supérieur ou égal à 1 ;
un émetteur (12) qui amène l'antenne de transmission (11) à transmettre le signal multiporteuse, en traitant et en délivrant en sortie le signal multiporteuse vers l'antenne de transmission (11) ;
une antenne de réception (21) comprenant N éléments d'antenne de réception, où N est un nombre naturel supérieur ou égal à 1 ;
un récepteur (22) qui mesure, pendant une première période équivalente à un cycle dérivé d'une activité du corps vivant (50), une pluralité de signaux de réception qui sont reçus par chacun des N éléments d'antenne de réception et qui comprennent un signal réfléchi qui est le signal multiporteuse transmis depuis chacun des M éléments d'antenne de transmission, qui a été réfléchi ou dispersé par le corps vivant (50) ;
un calculateur de fonction de transfert complexe (23, 123) qui calcule une pluralité de fonctions de transfert complexes pour chacune d'une pluralité de sous-porteuses auxquelles correspond la pluralité de signaux de sous-porteuse, en utilisant la pluralité de signaux de réception mesurés par le récepteur (22) pendant la première période, la pluralité de fonctions de transfert complexes indiquant une caractéristique de propagation entre un élément d'antenne de transmission et un élément d'antenne de réception dans chacune des M × N combinaisons qui sont des combinaisons de chacun des M éléments d'antenne de transmission et de chacun des N éléments d'antenne de réception ;
un calculateur de matrice de corrélation de corps vivant (25, 125) qui calcule, pour chacune de la pluralité de sous-porteuses, une matrice de corrélation de corps vivant ayant M lignes × N colonnes en (i) enregistrant séquentiellement en série temporelle, qui est un ordre dans lequel la pluralité de signaux de réception sont mesurés, la pluralité de fonctions de transfert complexes calculées par le calculateur de fonction de transfert complexe et (ii) extrayant des composantes relatives au corps vivant (50) à partir de la pluralité de fonctions de transfert complexes enregistrées séquentiellement en série temporelle, l'(i) enregistrement et l'(ii) extraction étant effectués pour chacune de la pluralité de sous-porteuses et chacune des M × N combinaisons ; et
un estimateur (26, 126), **caractérisé en ce que** l'estimateur calcule, en utilisant la matrice de corrélation de corps vivant calculée pour chacune de la pluralité de sous-porteuses, un spectre basé sur une méthode de classification de signal multiple, MUSIC, et estime, en tant que troisième distance, une distance pour laquelle le spectre devient une valeur maximale, dans lequel
la troisième distance est une somme d'une première distance entre l'antenne de transmission (11) et le corps vivant (50) et d'une seconde distance entre l'antenne de réception (21) et le corps vivant (50).

2. Dispositif d'estimation selon la revendication 1, dans lequel
le calculateur de matrice de corrélation de corps vivant (25, 125) calcule, pour chacune de la pluralité de sous-porteuses, la matrice de corrélation de corps vivant ayant M lignes × N colonnes, en normalisant une matrice de fonction de transfert complexe à chaque point temporel de la pluralité de fonctions de transfert complexes enregistrées séquentiellement en série temporelle, en utilisant un élément qui sert de référence de la matrice de fonction de transfert complexe, et en extrayant les composantes relatives au corps vivant (50) à partir de la pluralité de fonctions de transfert complexes normalisées.

3. Dispositif d'estimation selon la revendication 1, comprenant en outre :
un calibreur (24, 124) qui calcule une valeur de correction pour corriger une erreur de phase dans une direction de sous-porteuse en se basant sur (i) des fonctions de transfert complexes idéales entre les M éléments d'antenne de transmission et les N éléments d'antenne de réception pouvant être obtenues en se basant sur une distance inter-antennes entre les M éléments d'antenne de transmission et les N éléments d'antenne de réception et (ii) une matrice de fonction de transfert complexe de référence comprenant M × N fonctions de transfert complexes mesurées dans une seconde période, et corrige la pluralité de fonctions de transfert complexes pour la première période.

4. Dispositif d'estimation (10, 100) selon l'une quelconque des revendications 1 à 3, dans lequel
au moins l'un de M ou N est supérieur ou égal à 2, et
le dispositif d'estimation (10, 100) comprend en outre :
un estimateur d'angle (127) qui calcule, en utilisant la pluralité de fonctions de transfert complexes calculées par le calculateur de fonction de transfert complexe, un premier angle qui est un angle défini par deux éléments d'antenne ou plus parmi les M éléments d'antenne de transmission et les N éléments d'antenne de réception ; et
un positionneur (128) qui calcule la première distance à partir du premier angle et de la troisième distance, et calcule une position du corps vivant (50).

5. Dispositif d'estimation (10, 100) selon l'une quelconque des revendications 1 à 3, dans lequel
au moins l'un de M ou N est supérieur ou égal à 3, et
l'estimateur (26, 126) calcule, pour chacune des M × N combinaisons, une ellipse (1203) dans laquelle des positions de l'élément de transmission et de l'élément d'antenne de réception inclus dans la combinaison sont des foyers et une longueur d'un grand axe est la troisième distance, et estime une position du corps vivant (50) en se basant sur, parmi des intersections des M × N ellipses obtenues par calcul, M × N intersections qui sont les plus proches les unes des autres.

6. Dispositif d'estimation (10, 100) selon l'une quelconque des revendications 1 à 5, dans lequel
le calculateur de matrice de corrélation de corps vivant (25, 125) calcule la matrice de corrélation de corps vivant en effectuant une transformée de Fourier inverse dans une direction de sous-porteuse sur la pluralité de fonctions de transfert complexes.

7. Procédé d'estimation effectué par un dispositif d'estimation (10, 100) comprenant une antenne de transmission (11) comprenant M éléments d'antenne de transmission, où M est un nombre naturel supérieur ou égal à 1, et une antenne de réception (21) comprenant N éléments d'antenne de réception, où N est un nombre naturel supérieur ou égal à 1, le procédé d'estimation comprenant :
la génération d'un signal multiporteuse obtenu par modulation d'une pluralité de signaux de sous-porteuse ;
le fait d'amener l'antenne de transmission à transmettre le signal multiporteuse, en traitant et en délivrant en sortie le signal multiporteuse vers l'antenne de transmission (11) ;
la mesure, pendant une première période équivalente à un cycle dérivé d'une activité d'un corps vivant (50), d'une pluralité de signaux de réception qui sont reçus par chacun des N éléments d'antenne de réception et qui comprennent un signal réfléchi qui est le signal multiporteuse transmis depuis chacun des M éléments d'antenne de transmission, qui a été réfléchi ou dispersé par le corps vivant (50) ;
le calcul d'une pluralité de fonctions de transfert complexes pour chacune d'une pluralité de sous-porteuses auxquelles correspond la pluralité de signaux de sous-porteuse, en utilisant la pluralité de signaux de réception mesurés pendant la première période, la pluralité de fonctions de transfert complexes indiquant une caractéristique de propagation entre un élément d'antenne de transmission et un élément d'antenne de réception dans chacune des M × N combinaisons qui sont des combinaisons de chacun des M éléments d'antenne de transmission et de chacun des N éléments d'antenne de réception ;
le calcul, pour chacune de la pluralité de sous-porteuses, d'une matrice de corrélation de corps vivant ayant M lignes × N colonnes en (i) enregistrant séquentiellement en série temporelle, qui est un ordre dans lequel la pluralité de signaux de réception sont mesurés, la pluralité de fonctions de transfert complexes calculées et (ii) extrayant des composantes relatives au corps vivant à partir de la pluralité de fonctions de transfert complexes enregistrées séquentiellement en série temporelle, l'(i) enregistrement et l'(ii) extraction étant effectués pour chacune de la pluralité de sous-porteuses et chacune des M × N combinaisons ; **caractérisé par**
le calcul, en utilisant la matrice de corrélation de corps vivant calculée pour chacune de la pluralité de sous-porteuses, d'un spectre basé sur une méthode de classification de signal multiple, MUSIC, et l'estimation, en tant que troisième distance, d'une distance pour laquelle le spectre devient une valeur maximale, dans lequel
la troisième distance est une somme d'une première distance entre l'antenne de transmission (11) et le corps vivant (50) et d'une seconde distance entre l'antenne de réception (21) et le corps vivant (50).

8. Procédé d'estimation selon la revendication 7, dans lequel
dans le calcul de la matrice de corrélation de corps vivant ayant M lignes × N colonnes, la matrice de corrélation de corps vivant ayant M lignes × N colonnes est calculée, pour chacune de la pluralité de sous-porteuses, en normalisant une matrice de fonction de transfert complexe à chaque point temporel de la pluralité de fonctions de transfert complexes enregistrées séquentiellement en série temporelle, en utilisant un élément qui sert de référence de la matrice de fonction de transfert complexe, et en extrayant les composantes relatives au corps vivant (50) à partir de la pluralité de fonctions de transfert complexes normalisées.

9. Programme pour amener un ordinateur qui constitue le dispositif d'estimation de l'une quelconque des revendications 1 à 6 à exécuter le procédé d'estimation selon la revendication 7 ou la revendication 8.
